# FASCICULE DE BREVET EUROPEEN

(11) **EP 0 681 383 B1**
(45) Date de publication et mention de la délivrance du brevet: **31.03.2004**
(21) Numéro de dépôt: 95400995.7
(22) Date de dépôt: 02.05.1995
(51) Int. Cl.: H04L 12/18

(54) **Procédé de transmission de messages entre modules d'un réseau multiplexe**
Verfahren zum Nachrichtenübermittlung zwischen Modulen in einem Multiplexnetzwerk
Method of message transmission between modules of a multiplexed network

(30) Priorité: 29.04.1994 FR 9405252
(43) Date de publication de la demande: 08.11.1995
(73) Titulaire: Renault s.a.s., 92100 Boulogne Billancourt (FR)
(72) Inventeur: Bisiere, François, F-75003 Paris (FR)

(56) Documents cités:
- EP-A- 0 255 767
- GB-A- 2 268 035

## Description

L'invention concerne un procédé de transmission de messages entre modulés électroniques d'un réseau multiplexé de communication, notamment embarqué sur un véhicule automobile. L'invention s'applique à des réseaux automobiles répondant à différents protocoles, tels que VAN - Vehicle Area Network -, CAN ou J 1850.

Un réseau de communications multiplexées est constitué généralement de plusieurs modules électroniques, notamment des calculateurs pour l'injection, le système antiblocage des roues ABS, la boîte de vitesse automatique, le tableau de bord ou la climatisation par exemple, interconnectés entre eux par des moyens de câblage mono ou bifilaire, réalisant un bus de transmission de données. Ce sont des modules d'acquisition de signaux provenant de capteurs comme le capteur d'usure de frein ou de pression de pneu, et des modules de commande d'une ou plusieurs applications regroupées localement dans le véhicule, telles que la commande d'actionneurs comme les feux de signalisation, de la planche de bord... Le transfert d'informations entre ces modules du réseau s'effectue par paquet indivisible appelé trame de signaux numériques, qui est obtenue par transformation de ces informations réalisée par un contrôleur de protocole et qui est véhiculée selon un principe de transmission asynchrone. Chaque trame comprend différents champs consécutifs, qui sont constitués chacun d'un nombre de bits déterminé, la trame étant elle-même ordonnée et transmise suivant un protocole fixé.

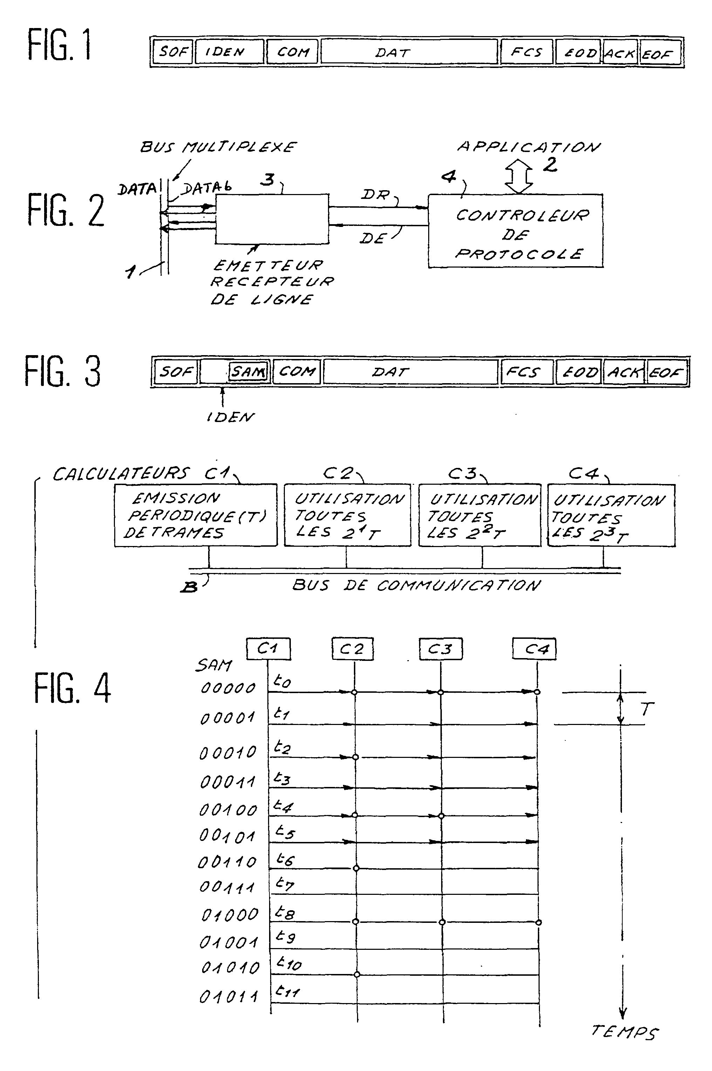

La figure 1 est une représentation d'une trame utilisée dans un réseau de type VAN par exemple. Elle contient d'abord un champ de début de trame SOF suivi d'un champ d'identification IDEN de 12 bits, définissant la nature des données et les destinataires de la trame. La trame comprend ensuite un champ de commande COM à quatre bits de l'opération à exécuter, suivi par un champ de données DAT comportant un nombre entier d'octets. Ces données sont destinées à un ou plusieurs modules qui filtrent la trame par l'identificateur IDEN. Enfin, la trame se termine par un champ de vérification d'erreur FCS (Frame Check Sequence) et un champ de fin de trame.

Le bus de communication reliant les modules est bifilaire et constitué par deux conducteurs référencés DATA et DATAb entre lesquels est transmise une tension constituant des signaux analogiques différentiels, le signe de la tension étant représentatif d'un état logique binaire.

La figure 2 est le schéma d'une interface de communication entre un bus de données 1 et la partie "application" 2 d'un module du réseau, comprenant essentiellement un émetteur-récepteur différentiel de ligne 3 et un contrôleur de protocole 4. La partie émettrice de l'émetteur-récepteur de ligne assure la conversion des données émises DE par le module et entrant par une ligne unipolaire, en signaux différentiels de tension adaptés au bus (DATA, DATAb). La partie réceptrice transmet au contrôleur de protocole 4 des données DR reçues du bus, après correction éventuelle.

Le contrôleur de protocole vérifie la nature des informations DR provenant de l'émetteur-récepteur de ligne, s'assure que les messages reçus respectent le protocole défini, gère les priorités, peut vérifier que les messages émis vers un module arrivent à destination, sérialise et met en forme suivant le protocole les informations DE à émettre, désérialise les informations reçues en vue de leur exploitation dans l'application, qui peut consister par exemple en une commande d'un actionneur ou d'un capteur, associée à des échanges d'informations bidirectionnels avec ceux-ci.

Chaque module est capable de reconnaître des trames de signaux comportant des adresses différentes, destinées à des applications différentes regroupées dans le module.

Or, pour transmettre des trames de données à plusieurs calculateurs connectés à un réseau de communication, on peut utiliser deux types d'adressage, l'un en point à point soit une trame par destinataire, l'autre en diffusion, soit une trame pour plusieurs destinataires.

L'adressage en point à point est plus coûteux en termes de charge du réseau et en capacité de traitement du module producteur de trames. Il doit être justifié par exemple par des besoins de qualité sur la transmission, comme l'utilisation d'un acquittement.

L'adressage en diffusion doit répondre à tous les besoins des destinataires d'une même trame, en particulier aux plus contraignants. Ainsi, lorsqu'un destinataire a besoin de l'information très fréquemment, les autres destinataires moins exigeants doivent filtrer les trames pour faire correspondre la fréquence des réceptions de trames à leur besoin. Cette différence de contrainte peut se traduire par une différence de précision sur une information, notamment par le besoin de n'utiliser qu'une trame sur deux ou n par rapport aux besoins les plus contraignants.

Ce problème est souvent résolu par l'adaptation du module producteur qui émet des trames avec un identificateur par période d'émission ou par module destinataire. Cela induit des mécanismes coûteux car la charge du réseau est importante et les capacités de traitement du module producteur doivent être surdimensionnées par rapport aux besoins de l'ensemble des modules du réseau.

Il est parfois résolu par l'acceptation de toutes les trames dans le contrôleur de protocole du module destinataire suivie d'un filtrage par l'application de ce module.

Par exemple, la publication GB-A-2 268 035 décrit un réseau de diffusion de blocs de données à plusieurs stations récepteurs, chaque station récepteur mémorisant chaque bloc de données avant d'en extraire la portion qui lui est destinée. Un identificateur unique d'un bloc de données est utilisé pour calculer l'adresse mémoire dans la station récepteur où les données du bloc sont stockées. GB-A-2 268 035 enseigne donc d'accepter tous les blocs de données à chaque station destinataire avant que l'information ne soit filtrée par l'application exécutée.

La publication EP-A-0 255 767 décrit une méthode pour définir un sous-ensemble de stations destinataires auquel est diffusé un message par une station émettrice. Par conséquent, les blocs diffusés sont également tous reçus par toutes les stations réceptrices.

Cela induit des mécanismes coûteux au niveau de chaque destinataire, notamment en mémoire de stockage ou en puissance de traitement. On peut aussi n'accepter qu'une seule trame dans le contrôleur de protocole après une lecture mais cela induit un retard sur l'information.

Le but de la présente invention est de résoudre ce problème en permettant à chaque module récepteur d'accepter, à l'aide d'un mécanisme peu coûteux, un échantillon des trames disponibles sur le réseau, sans induire de retard sur l'information.

Pour cela, l'invention propose un procédé de transmission de messages selon la revendication 1 et un réseau de communication selon la revendication 5.

D'autres caractéristiques et avantages de l'invention apparaîtront à la lecture de la description suivante d'un exemple particulier de réalisation, cette description étant faite en relation avec les dessins joints dans lesquels, outre les figures 1 et 2 déjà décrites représentant respectivement une trame utilisée dans un réseau de type VAN et le schéma d'une interface de communication entre un bus de données et la partie "application" d'un module du réseau:
- la figure 3 est la représentation d'une trame émise lors du procédé selon l'invention;
- la figure 4 représente le déroulement du procédé selon l'invention appliqué à un réseau multiplexé de quatre modules électroniques;
- la figure 5 est la représentation des différentes trames émises au cours du temps.

Selon l'invention, le procédé de transmission de messages entre des modules électroniques d'un réseau multiplexé, reliés entre eux par un bus de communication, consiste tout d'abord à définir un champ SAM de N bits dans la partie identificateur de la trame. Dans le cas d'un réseau CAN, VAN ou J1850, l'identificateur IDEN comporte 12 bits et permet d'identifier les données transmises. Les calculateurs utilisent les identificateurs de trame pour sélectionner les trames qui les intéressent sur le réseau. On peut définir par exemple un champ SAM sur cinq bits de poids faible de l'identificateur, comme le montre la figure 3.

Dans une seconde étape, facultative, le module producteur de trames initialise la valeur du contenu de ce champ SAM à une valeur connue de tous les modules destinataires, par exemple à une valeur nulle 0.

Après chaque émission de la trame selon une période T, ce module producteur incrémente, ou décrémente, grâce à un compteur le contenu de ce champ SAM modulo sa valeur maximale 2^{N}. Dans le cas d'un champ SAM sur 5 bits, il est initialisé à 0 et incrémenté, ou décrémenté, de 1 modulo 2⁵ ou 32 après chaque émission de trame.

Chaque module récepteur recevant l'information transmise doit alors effectuer un filtrage avec masque basé sur l'acceptation de la trame si une partie de son champ SAM est conforme à un modèle donné auquel elle est comparée. Ainsi, le filtrage consiste d'une part à comparer n bits de poids faible du champ SAM, n étant un entier positif inférieur au nombre N de bits du champ SAM, à une valeur donnée, 0 par exemple, alors que les bits de poids fort sont masqués et d'autre part à effectuer les autres tests habituels sur le champ identificateur IDEN. Si les résultats de ces deux comparaisons sont positifs, la trame pourra être acceptée, sinon la trame ne sera pas prise en compte par le module récepteur. La période de réception par le module récepteur de la trame émise sur le réseau est alors de 2ⁿ fois la période T de transmission. Chaque module récepteur doit donc disposer d'un filtre avec masque lui permettant d'accepter un échantillon des trames disponibles sur le réseau. Un tel filtre est aisément réalisable dans le contrôleur de protocole du module.

La figure 4 représente le déroulement du procédé selon l'invention appliqué à un réseau multiplexé de quatre modules électroniques C₁ à C₄, reliés entre eux par un bus de communication B.

Le module ou calculateur C₁ émet des trames selon une période T, à destination des autres calculateurs. Pour chaque trame émise, un champ SAM est défini sur cinq bits, initialisé à 0 et incrémenté de 1 modulo 2⁵=32 après chaque émission.

Le calculateur C₂ n'utilise que les informations délivrées par une trame sur deux, soit avec une période égale à 2ⁿT soit 2¹T, n étant égal à 1. Pour cela, au cours de l'étape de filtrage par masque il réalise la comparaison entre la valeur des n bits de poids faible du champ SAM, soit le bit de poids le plus faible dans ce cas-là, et la valeur nulle. Ainsi, on voit sur la figure 4 que ce calculateur C₂ prend en compte la première trame émise t₀ dont le champ SAM est égal à 0 soit 00000 sur les cinq bits, puis la troisième trame t₂ émise dont le champ SAM est égal à 2 soit 00010, et toutes les trames dont la période de réception est égale à 2T.

Le calculateur ou module C₃ n'a besoin que d'une trame sur quatre, c'est-à-dire avec une période de réception de 2ⁿ*T=2²*T. Pour cela, les n=2 bits de poids le plus faible doivent être nuls.

Quant au calculateur C₄, la période de réception des trames qu'il doit utiliser est égale à 2ⁿ*T=2³*T, de telle sorte que seules les trames dont les n=3 bits de poids faible sont égaux à 0 sont pris en compte.

Le test sur les n bits de poids le plus faible du champ SAM de la trame reçue peut être réalisé au moyen d'une porte ET sur laquelle on rentre d'une part la valeur des cinq bits et d'autre part une valeur exprimée sur cinq bits dont les n bits de poids faible sont à 1 et les autres à 0, la sortie de cette porte ET devant être égale à 0 pour que la trame soit acceptée et prise en compte par le module récepteur.

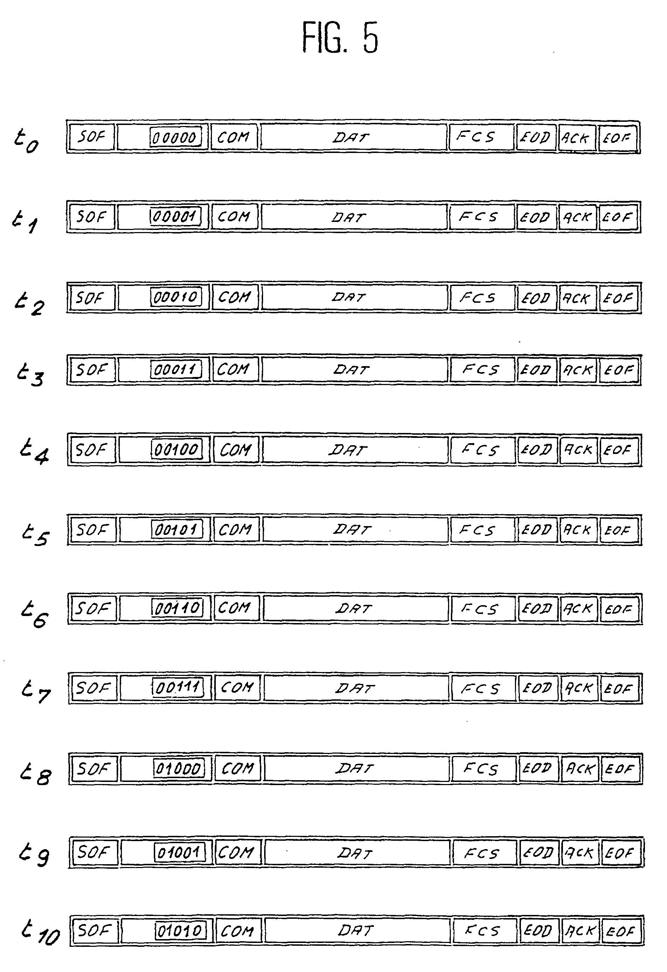

La figure 5 est la représentation des différentes trames émises au cours du temps. La première trame to émise par le module C₁ est acceptée par tous les modules ayant un modèle de comparaison égal à 00000, alors que la seconde trame émise t₁, dont le champ SAM est égal à 00001, est refusée par tous les modules. La troisième trame t₂ émise ayant un champ SAM égal à 00010, tout comme la cinquième t₄, la septième t₆, ...sont acceptée par le calculateur C₂. Le calculateur C₃ accepte la cinquième t₄ et la neuvième trame t₈ émises dont les champ SAM ont les deux bits de poids faible égaux à 0. Le calculateur C₄ accepte la neuvième t₈ et la dix-septième t₁₆ trames dont les champs SAM ont les trois bits de poids faible égaux à 0.

Ainsi, selon l'invention, le module producteur des trames sur le réseau fait évoluer le champ SAM, défini dans la partie adresse de chaque trame, selon une série connue de tous les modules destinataires, ce qui leur permet de n'accepter qu'une partie des trames émises par le producteur en n'acceptant qu'une partie des valeurs de cette série. Cela allège la charge du module récepteur car la trame non acceptée en raison de son champ SAM ne remonte pas au bloc application du module, dont la charge de travail est ainsi réduite. En conséquence, le calculateur du module récepteur reste d'un coût de fabrication relativement bas et le débit du réseau est optimisé, ce qui a son importance pour un réseau destiné à des véhicules automobiles.

## Revendications

1. Procédé de transmission de messages entre modules électroniques d'un réseau multiplexé de communication reliés par un bus de communication (1), **caractérisé en ce que** le procédé comporte les étapes suivantes remplies par un module émetteur de trames :
- définition d'un champ SAM dans un champ identificateur IDEN d'adresses de chaque trame ;
- initialisation de la valeur du contenu du champ SAM de chaque trame à émettre à une valeur connue de tous les modules destinataires desdites trames ;
- émission de chaque trame sur le bus de communication ;
- incrémentation, ou décrémentation, grâce à un compteur, du contenu du champ SAM modulo sa valeur maximale à chaque émission de trame ;
et les étapes suivantes remplies par chaque module récepteur de trames :
- filtrage avec masque de chaque trame reçue comportant une comparaison entre le champ identificateur IDEN de la trame reçue avec un ou plusieurs identificateurs mis en mémoire dans un contrôleur de protocole (4) du module récepteur en vue de son exploitation dans l'application du module et une comparaison d'une partie dudit champ SAM avec un modèle donné mémorisé par le module récepteur ;
- acceptation de chaque trame si les résultats des deux comparaisons sur le champ identificateur IDEN et sur la partie du champ SAM sont positifs.

2. Procédé de transmission selon la revendication 1, **caractérisé en ce que** ledit champ SAM est défini sur un nombre entier N des bits de poids faible dudit identificateur d'adresses IDEN de chaque trame et **en ce que** le filtrage par chaque module récepteur est obtenu par comparaison de n bits de poids faible dudit champ SAM avec une valeur donnée, par exemple nulle, n étant un entier positif inférieur à N tel que la période de réception de la trame soit égale à 2ⁿ fois la période T de transmission, les N-n bits de poids fort étant masqués.

3. Procédé de transmission selon les revendications 1 et 2, **caractérisé en ce que** le filtrage avec masque de la trame reçue est réalisé par le contrôleur de protocole du module récepteur.

4. Procédé de transmission selon l'une des revendications 1 à 3, entre modules électroniques d'un réseau multiplexé de communication répondant au protocole VAN, **caractérisé en ce que** ledit champ SAM est défini sur 5 des bits de poids faible dudit champ identificateur IDEN des trames émises.

5. Réseau multiplexé de communication comportant plusieurs modules électroniques pour transmettre des messages selon le procédé des revendications précédentes, les modules électroniques étant reliés par un bus de communication et comprenant un module émetteur possédant:
- des moyens de définition d'un champ SAM dans le champ identificateur IDEN d'adresses de chaque trame;
- des moyens d'initialisation de la valeur du contenu du champ SAM de chaque trame;
- des moyens d'émission de chaque trame;
- un compteur destiné à incrémenter, ou décrémenter, le contenu dudit champ SAM modulo sa valeur maximale 2ⁿ à chaque émission de trame.
chaque module récepteur de trames possédant:
- des moyens de filtrage par masque de chaque trame reçue;
- des moyens d'acceptation de trame si le résultat du filtrage est positif.

## Claims

1. A process for the transmission of messages between electronic modules of a multiplexed communication network which are connected by a communication bus (1), **characterised in that** the process comprises the following steps performed by a frame emitter module:
- definition of a field SAM in an address identifier field IDEN of each frame;
- initialisation of the value of the content of the field SAM of each frame to be emitted to a value known to all the recipient modules of said frames;
- emission of said frame on the communication network;
- incrementation or decrementation by means of a counter of the content of the field SAM modulo its maximum value at each frame emission;
and the following steps performed by each frame receiver module:
- mask filtering of each received frame comprising a comparison between the identifier field IDEN of the frame received with one or more identifiers stored in a memory in a protocol controller (4) of the receiver module for exploitation thereof in the application of the module and a comparison of a part of said field SAM with a given model stored in the memory of the receiver module; and
- acceptance of each frame if the results of the two comparisons on the identifier field IDEN and the part of the field SAM are positive.

2. A transmission process according to claim 1 **characterised in that** said field SAM is defined on a whole number N of the low-significance bits of the address identifier IDEN of each frame and that filtering by each receiver module is obtained by comparison of n low-significance bits of said field SAM with a given value, for example zero, n being a positive integer of less than N such that the reception period of the frame is equal to 2ⁿ times the transmission period T, the N-n high-significance bits being masked.

3. A transmission process according to claims 1 and 2 **characterised in that** the mask filtering operation for the received frame is implemented by the protocol controller of the receiver module.

4. A transmission process according to one of claims 1 to 3 between electronic modules of a multiplexed communication network corresponding to the VAN protocol **characterised in that** said field SAM is defined over 5 of the low-significance bits of said identifier field IDEN of the emitted frames.

5. A multiplexed communication network comprising a plurality of electronic modules for transmitting messages in accordance with the process of the preceding claims, the electronic modules being connected by a communication bus and comprising an emitter module having:
- means for defining a field SAM in the address identifier field IDEN of each frame;
- means for initialising the value of the content of the field SAM of each frame;
- means for emitting each frame; and
- a counter intended to increment or decrement the content of said field SAM modulo its maximum value 2ⁿ at each frame emission,
each frame receiver module having:
- means for mask filtering of each frame received; and
- means for frame acceptance if the result of the filtering operation is positive.

## Patentansprüche

1. Verfahren zur Übertragung von Nachrichten zwischen elektronischen Modulen eines gemultiplexten Kommunikationsnetzes, die durch einen Kommunikationsbus verbunden sind, **dadurch gekennzeichnet, dass** das Verfahren die folgenden Schritte aufweist, ausgeführt durch ein Modul, das Datenübertragungsblöcke aussendet:
- Definition eines Feldes SAM in einem Identifikationsfeld IDEN der Adressen jedes Datenübertragungsblocks;
- Initialisieren des in dem Feld SAM jedes auszusendenden Datenübertragungsblocks enthaltenen Wertes mit einem Wert, der allen Zielmodulen der Datenübertragungsblöcke bekannt ist;
- Aussenden jedes Datenübertragungsblocks auf dem Kommunikationsbus;
- Erhöhen oder Verringern, durch einen Zähler, des Inhalts des Feldes SAM modulo seinem Maximalwert, bei jedem Aussenden eines Datenübertragungsblocks;
und die folgenden Schritte, die durch jedes den Datenübertragungsblock empfangende Modul ausgeführt werden:
- Filtern des empfangenen Datenübertragungsblocks mittels einer Maske, umfassend einen Vergleich zwischen dem Identifikationsfeld IDEN des Datenübertragungsblocks mit einem oder mehreren Identifikatoren, die in dem Speicher der Steuerung des Protokolls (4) des Empfangsmoduls abgelegt sind, im Hinblick auf seine Benutzung in der Anwendung des Moduls und einen Vergleich eines Teils des Feldes SAM mit einem gegebenen Muster, gespeichert durch das Empfängermodul;
- Akzeptieren des Datenübertragungsblocks, wenn die Ergebnisse der beiden Vergleiche des Identifikationsfeldes IDEN und des Teils des Feldes SAM positiv sind.

2. Verfahren zur Übertragung gemäß Anspruch 1, **dadurch gekennzeichnet, dass** das Feld SAM auf einer ganzen Zahl N von Bits mit niedrigem Stellenwert des Identifikators der Adressen IDEN jedes Datenübertragungsblocks definiert ist und dadurch, dass die Filterung durch jedes Empfängermodul erhalten wird durch den Vergleich von n Bits niedrigen Stellenwerts des Feldes SAM mit einem gegebenen Wert, z.B. Null, wobei n eine positive ganze Zahl kleiner als N ist, derart, dass die Empfangsperiode des Datenübertragungsblocks gleich 2ⁿ mal der Periode T der Übertragung ist, wobei die N-n Bits mit hohem Stellenwert maskiert sind.

3. Verfahren zur Übertragung gemäß den Ansprüchen 1 und 2, **dadurch gekennzeichnet, dass** die Filterung mittels Maske des empfangenen Datenübertragungsblocks durch die Steuerung des Protokolls des Empfangsmoduls verwirklicht wird.

4. Verfahren zur Übertragung gemäß einem der Ansprüche 1 bis 3, zwischen elektronischen Modulen eines gemultiplexten Kommunikationsnetzes, die auf das VAN-Protokoll antworten, **dadurch gekennzeichnet, dass** das Feld SAM definiert wird auf 5 der Bits von niedrigem Stellenwert des Identifikationsfeldes IDEN der ausgesandten Datenübertragungsblöcke.

5. Gemultiplextes Kommunikationsnetz, das mehrere elektronische Module zum Übertragen von Nachrichten gemäß dem Verfahren der vorhergehenden Ansprüche aufweist, wobei die Module durch einen Kommunikationsbus verbunden sind, und welches ein Sendemodul aufweist, das besitzt:
- Mittel zur Definition eines Feldes SAM in dem Identifikationsfeld IDEN der Adressen jedes Datenübertragungsblocks;
- Mittel zum Initialisieren des in dem Feld SAM jedes Datenübertragungsblocks enthaltenen Wertes;
- Mittel zum Senden jedes Datenübertragungsblocks;
- einen Zähler, dazu bestimmt, den Inhalt des Feldes SAM modulo seinem Maximalwert 2ⁿ bei jedem Senden eines Datenblocks zu erhöhen oder zu verringern.
wobei jedes Empfangsmodul für Datenübertragungsblöcke besitzt:
- Mittel zum Filtern jedes empfangenen Datenübertragungsblocks mittels einer Maske;
- Mittel zum Akzeptieren eines Datenübertragungsblocks, wenn das Ergebnis der Filterung positiv ist.
